# EUROPÄISCHE PATENTSCHRIFT

(11) **EP 2 212 097 B1**
(45) Veröffentlichungstag und Bekanntmachung des Hinweises auf die Patenterteilung: **15.02.2012**
(21) Anmeldenummer: 08841898.3
(22) Anmeldetag: 23.10.2008
(51) Int. Cl.: B29C 51/20, B65D 21/02, B29C 51/32

(54) **VERFAHREN ZUR HERSTELLUNG THERMOGEFORMTER ARTIKEL SOWIE WERKZEUG ZU DEREN HERSTELLUNG**
METHOD FOR PRODUCING THERMOFORMED ARTICLES AS WELL AS A DIE FOR THE PRODUCTION THEREOF
PROCÉDÉ ET OUTIL DE RÉALISATION D'ARTICLES THERMOFORMÉS

(30) Priorität: 23.10.2007 DE 102007050637
(43) Veröffentlichungstag der Anmeldung: 04.08.2010
(73) Patentinhaber: RPC bebo-Plastik GmbH, 27432 Bremervoerde (DE)
(72) Erfinder: MERBACH, Juergen, 21682 Stade (DE); DIECKMANN, Hauke, 21702 Ahlerstedt (DE); KRAUT, Michael, 27432 Bremervoerde-Elm (DE)
(74) Vertreter: Leonhard, Frank Reimund
(86) Internationale Anmeldenummer: PCT/EP2008/064376
(87) Internationale Veröffentlichungsnummer: WO 2009/053436

(56) Entgegenhaltungen:
- EP-A1- 0 718 077
- WO-A2-2005/090199
- DE-A1- 1 586 693
- DE-A1- 3 630 063
- JP-A- 9 136 353
- JP-A- 2006 015 445

## Beschreibung

Die Erfindung betrifft ein Verfahren zur Herstellung thermogeformter Artikel, wie Lebensmittelverpackungen oder Teile hiervon, mit einer mechanischen Schwächung zwischen aneinander angrenzenden Funktionsbereichen, die im Rahmen einer nutzerseitigen Verwendung an der mechanischen Schwächung voneinander wenigstens teilweise trennbar sind, in einem Thermoformwerkzeug mit einem Oberwerkzeug und einem Unterwerkzeug, die gegeneinander bewegbar sind (Werkzeugbewegungsrichtung), aufweisend die Schritte:
Zuführen einer Kunststofffolie zwischen Oberwerkzeug und Unterwerkzeug und Thermoformen der zugeführten Kunststofffolie durch Schließen von Oberwerkzeug und Unterwerkzeug in der Werkzeugsbewegungsrichtung,
wobei die mechanische Schwächung während des Zeitraums, in dem sich das zu formende Material in dem Thermoformwerkzeug befindet, eingebracht wird.

Die Erfindung betrifft des Weiteren ein Werkzeug zur Herstellung thermogeformter Artikel, wie Lebensmittelverpackungen oder Teile hiervon, aufweisend:
ein Oberwerkzeug, ein Unterwerkzeug und wenigstens ein im Oberwerkzeug oder Unterwerkzeug angeordnetes Perforier- oder Prägeelement mit einem Perforier- oder Prägespiegel, wobei das Oberwerkzeug und das Unterwerkzeug gegeneinander bewegbar sind (Werkzeugbewegungsrichtung).

Thermogeformte Artikel sowie Verfahren und Werkzeuge zu deren Herstellung sind aus dem Stand der Technik bekannt. Bei den Artikeln kann es sich beispielsweise um Lebensmittelverpackungen oder Teile hiervon handein. Die Verpackungen können mehrere Kammern enthalten, die jeweils mit einem Lebensmittel gefüllt sind. Zwischen den einzelnen Kammern kann eine mechanische Schwächung, beispielsweise in Form einer Prägung oder Perforation vorgesehen sein, entlang der sich die Kammern voneinander trennen lassen. Solche Lebensmittelverpackungen dienen dazu, größere Gebinde in Teilgebinde zu unterteilen, die vom Verbraucher nacheinander konsumiert werden können. Weiterhin können die Kammern mit unterschiedlichen Produkten gefüllt sein, die nach dem Öffnen gemischt oder zumindest gemeinsam konsumiert werden. Schließlich sind Verpackungen erhältlich, bei denen die unterschiedlichen Inhalte der Gefache unterschiedliche Erwärmungen erfahren sollen, was durch eine Abtrennung der Teilgebinde ermöglicht wird.

Die Verpackungen werden hergestellt, indem aus einem ebenen Folienmaterial durch Thermoformen die räumliche Struktur der herzustellenden Artikel mit der entsprechenden Anzahl an Kammern mit jeweils dazwischen liegendem Verbindungsbereich erzeugt wird und in dem jeweils ebenen Verbindungsbereich zwischen zwei Kammern die mechanische Schwächung eingebracht wird. Die Verpackungen werden mit einer aufgesiegelten oder aufgeschweißten Folie verschlossen, die ebenfalls mechanisch geschwächt ist. Der Verbindungsbereich erstreckt sich dabei stets in einer einzigen, zur Folienebene parallelen Ebene.

Bei Lebensmittelverpackungen, bei denen die mechanische Schwächung den zuvor beschriebenen ebenen Verlauf aufweist, wird diese mittels eines Perforier- oder Prägewerkzeugs in das Material eingebracht, während sich dieses in dem Thermoformwerkzeug befindet. Weicht der Verlauf der mechanischen Schwächung allerdings von dem zuvor beschriebenen ebenen Verlauf ab und verläuft in einer hierzu schrägen oder senkrechten Ebene, oder erstreckt sich der Verlauf der mechanischen Schwächung sogar in drei Raumrichtungen, ist dieses Verfahren nicht zur Herstellung solcher Artikel geeignet. Solche Verpackungen werden nach dem Stand der Technik hergestellt, indem sie zunächst ohne Schwächung thermogeformt werden und nachfolgend die mechanische Schwächung mit Hilfe eines Lasers oder eines Wasserstrahls eingebracht wird. Unabhängig davon, ob der herzustellende Artikel oder die Strahlführung bewegt wird, ist es notwendig, die Fokussierung des Strahls ständig nachzuregeln. Nur auf diese Weise ist es möglich, gleiche Perforationsergebnisse in sämtlichen Bereichen der nicht eben liegenden Schwächung zu erzielen.

Das obige Verfahren sowie ein mit diesem Verfahren hergestellter Behälter als Lebensmittelverpackung sind beispielsweise aus der WO 2005/090199 A2 bekannt. Diese Druckschrift offenbart eine Lebensmittelverpackung in Form von sterilisierbaren Behältern, die miteinander in einer trennbaren Weise verbunden sind. Die Behälter sind aus einem Kunststoffmaterial geformt und besitzen zwischen sich einen Flansch (Verbindungsbereich), der mechanisch geschwächt ist, und an dem die Behälter durch Brechen voneinander getrennt werden können.

Die Behälter selbst entstehen aus einer Kunststofffolie, die mittels eines Thermoformvorgangs in die gewünschte Form gebracht wurde. Die mechanische Schwächung wird nach dem Aushärten der Behälter mittels eines Lasers oder eines Wasserstrahls in den Flanschbereich eingebracht. Durch eine entsprechende Strahlführung und Fokussierung ist es dabei möglich, die in Bearbeitungsrichtung uneben verlaufende Schwächung in den Flanschbereich einzubringen. Obwohl mit diesem Verfahren Lebensmittelverpackungen mit mechanischer Schwächung von guter Qualität hergestellt werden können, stellt die Laser- oder Wasserstrahlbearbeitung einen zusätzlichen Verfahrensschritt dar, der mit einem nicht unwesentlichen Aufwand sowie zusätzlichen Kosten verbunden ist.

Die DE-A1 15 86 693 offenbart eine Verpackung aus thermoplastischer Kunststofffolie sowie ein Verfahren zur Herstellung dieser Verpackung und eine Vorrichtung zur Durchführung des Verfahrens. Dabei wird in die Kunststofffolie mittels einer Nadelreihe eine einfache horizontale Schwächungslinie eingebracht, die zu einer gezielten Orientierung von Kunststoffmolekülen im Bereich der Schwächungslinie führt, so dass die Verpackung an der Schwächungslinie einfach trennbar ist.

Ausgehend von dem beschriebenen Stand der Technik liegt der Erfindung die Aufgabe zugrunde, ein Verfahren sowie ein Werkzeug zur Herstellung von thermogeformten Artikeln, wie Lebensmittelverpackungen oder Teilen hiervon, zu schaffen, bei denen die thermogeformten Artikel möglichst in einer einzigen Bearbeitungsstation hergestellt werden können, kostenintensive und aufwändige Verfahren, wie Laserstrahl- oder Wasserstrahlschneiden, nicht eingesetzt werden müssen und mit denen stabilisierte, aufklemmbare oder rastende Deckelelemente herstellbar sind.

Diese Aufgabe wird durch ein Verfahren der eingangs genannten Art gelöst, das dadurch gekennzeichnet ist, dass die Schwächung in zueinander in Werkzeugbewegungsrichtung versetzten und sich senkrecht zu dieser erstreckenden Bereichen des Artikels ausgebildet wird und/oder wenigstens teilweise in wenigstens einer sich in Werkzeugbewegungsrichtung erstreckenden Ebene in einem Winkel ungleich 90° zur Werkzeugbewegungsrichtung in dem Artikel verlaufend ausgebildet wird.

Vorrichtungsseitig wird die Aufgabe durch ein Werkzeug der eingangs genannten Art gelöst, das dadurch gekennzeichnet ist, dass der Perforier- oder Prägespiegel zumindest zwei erste Abschnitte aufweist, die zueinander in Werkzeugbewegungsrichtung versetzt sind und sich senkrecht zu dieser erstrecken und jeder der zwei ersten Abschnitte zur Ausbildung eines Abschnitts der mechanischen Schwächung geeignet ist und/oder der Perforier- oder Prägespiegel wenigstens einen zweiten Abschnitt aufweist, der zur Ausbildung eines Abschnitts der mechanischen Schwächung geeignet ist und in einem Winkel α ungleich 90° zur Werkzeugbewegungsrichtung ausgebildet ist.

Das Werkzeug nach Anspruch 13 wird beschrieben mit Hilfe einer in der Regel vertikalen Werkzeug-Bewegungsrichtung und einer dazu senkrecht verlaufenden Richtung oder Ebene, in der normalerweise die Folie, welche von dem Werkzeug bearbeitet wird, zu liegen kommt (in dem Verfahren nach Anspruch 1). Aus dieser Folie entstehen thermogeformte Deckel oder Unterteile (Schalen), insbesondere solche mit mehreren Abteilungen (auch: Gefache). Diese als Folienebene zu beschreibende Arbeitsebene liegt senkrecht zur Werkzeug-Bewegungsrichtung. Es bestehen zumindest zwei Abschnitte, die sich in der Folienebene erstrecken und in der Werkzeug-Bewegungsrichtung zueinander versetzt sind, vorzugsweise parallel. Dadurch wird eine dritte Dimension umschrieben, in welcher die mechanische Schwächungslinie eingebracht wird, verursacht von dem Perforier- oder Prägespiegel, der die entsprechenden Abschnitte auf der Werkzeugseite aufweist.

Durch die zumindest zwei ersten Abschnitte des Perforier- oder Prägespiegels werden zumindest zwei Abschnitte einer mechanischen Schwächung in die Folie eingebracht, wobei diese Abschnitte bevorzugt linienförmig ausgebildet sind.

Die Linie erstreckt sich nicht ausschließlich horizontal und nicht ausschließlich vertikal, sondern kann gegenüber der Werkzeug-Bewegungsrichtung geneigt sein, wobei ein bevorzugter Neigungsbereich zwischen 35° und 65° gegenüber der Werkzeug-Bewegungsrichtung orientiert ist. Diese wird im Anspruch 13 durch die Umschreibung des Begriffs eines Winkels, der ungleich 90° zur Werkzeug-Bewegungsrichtung ausgebildet ist, zum Ausdruck gebracht, so dass der zumindest eine zweite Abschnitt des Perforier- oder Prägespiegels einen Winkel aufweist, der von einer Fläche senkrecht zur Bewegungsrichtung abweicht. Der genannte Winkel definiert sich zwischen der Erstreckung des ersten oder zweiten Abschnitts des Perforier- oder Prägespiegels und der Achse der Werkzeug-Bewegungsrichtung. Beispielsweise hat ein Abschnitt des Prägespiegels, der in der Folienebene als Arbeitsebene liegt; einen Winkel von 90°, und ein Abschnitt, der senkrecht zur Folienebene als Arbeitsebene liegt, einen Winkel von 0°.

Unter Verwendung des erfindungsgemäßen Verfahrens ist es erstmals möglich, thermogeformte Artikel mit einer nahezu beliebig ausgebildeten Schwächung ohne Verwendung zusätzlicher Verfahren wie Laserstrahl- oder Wasserstrahlschneiden während des Thermoformens auszubilden. Zur Herstellung der betreffenden Artikel notwendige Vorrichtungen beschränken sich in vorteilhafter Weise auf solche zur Thermoformung, weshalb Produktionskosten verringert und fertigungstechnische Abläufe vereinfacht werden können. Zur Durchführung des Verfahrens können übliche Thermoformmaschinen oder -gruppen genutzt werden, wobei ein erfindungsgemäßes Werkzeug eingebaut wird und keine kostenintensiven Erweiterungen wie beispielsweise eine zusätzliche Laserstation notwendig sind.

Durch das erfindungsgemäße Verfahren können in besonders einfacher und kostengünstiger Weise Verpackungen hergestellt werden, die beispielsweise hohe Anforderungen an die Stabilität erfüllen. Hier ist es möglich, Versteifungen in Form von Einprägungen, Erhebungen oder Biegungen in dem Verbindungsbereich der Verpackung vorzusehen, ohne dass deren Trennbarkeit hierdurch nachteilig beeinflusst wird.

Des Weiteren ist das Verschließen von trennbaren Verpackungen nicht länger auf die Verwendung von aufgeklebten oder aufgeschweißten Folien beschränkt. Vielmehr können zu diesem Zweck nunmehr speziell an die Form und die Stabilität des Becherelements der Verpackung angepasste, rastende oder aufklemmbare Deckelelemente unter Nutzung des erfindungsgemäßen Verfahrens bzw. der erfindungsgemäßen Werkzeuge hergestellt werden, die gleichfalls mit Hilfe einer entsprechenden dreidimensionalen Formgebung stabilisiert sind.

Unter einer Perforation im Sinne der vorliegenden Erfindung ist eine teilweise Durchtrennung des Materials entlang einer beliebig geformten Linie zu verstehen, wobei Verbindungsstege in beliebiger Form und Anzahl bestehen bleiben. Unter einer Prägung im Sinne der vorliegenden Erfindung ist eine bereichsweise Verringerung des Materialsquerschnitts zu verstehen, ohne dass es zu einer vollständigen Durchtrennung des Materials kommt.

Die thermogeformten Artikel können gemäß dem Verfahren der beanspruchten Erfindung entweder perforiert oder geprägt sein. Es ist allerdings außerdem möglich, dass in das Material der Artikel sowohl eine Perforation als auch eine Prägung eingebracht wird, was dazu führt, dass das Material stellenweise vollständig durchtrennt ist und die verbleibenden Stege auf Grund der Prägung einen geringeren Materialquerschnitt aufweisen als der übrige Materialbereich. Aus Gründen einer einfachen Formulierung und des besseren Verständnisses wird bei der folgenden Beschreibung der Erfindung der Begriff der "mechanischen Schwächung" verwendet, der gemäß den vorstehenden Erläuterungen zu verstehen ist und alle diese Varianten erfassen soll.

Die mechanische Schwächung kann grundsätzlich in beliebigen Formen erzeugt werden. Sie dient im Allgemeinen dazu, zwischen mehreren Funktionsbereichen eine Teilungslinie auszubilden, entlang der die Funktionsbereiche im Rahmen einer nutzerseitigen Verwendung des Artikels wenigstens teilweise voneinander getrennt werden können. Bei den Funktionsbereichen kann es sich beispielsweise um Behälter einer Gebindeverpackung handeln, die entlang der mechanischen Schwächung voneinander ganz getrennt werden können, so dass die Inhalte der einzelnen Behälter jeweils separat verwertet werden können. Die mechanische Schwächung kann sowohl in einen Behälter als auch in einen zugehörigen Deckel eingebracht werden.

Wie allgemein bekannt, ist ihre Funktion des Weiteren nicht darauf beschränkt, Teilgebinde von einem Gesamtgebinde zu trennen, vielmehr können durch die Schwächung beliebige Funktionseinheiten voneinander getrennt werden. So ist es möglich, in einen Deckel vorgefertigte Öffnungsbereiche beispielsweise in Form von Öffnungen für einen Trinkhalm oder wiederverschließbaren Schüttöffnungen auszubilden. Im Falle einer Perforierung kann eine solche Öffnung durch Verwendung einer zusätzlichen Dichtfolie mediumsdicht ausgebildet werden. Im Falle einer Prägung ist die Verwendung einer zusätzlichen Dichtfolie nicht erforderlich.

Die Schwächung wird in den Artikel eingebracht, indem ein oder mehrere entsprechend der zu erzeugenden Gestalt der Schwächung geformte Perforier- oder Prägeelemente verwendet werden. Dieses bildet bzw. diese bilden den Perforier- oder Prägespiegel beispielsweise entsprechend der Schneide eines Messers aus, der die gewünschte Schwächung in das Material des herzustellenden Artikels einbringt (im Folgenden als Perforierelemente bzw. Perforierspiegel bezeichnet).

Um die gewünschte Form des Perforierspiegels auszubilden, können ein oder mehrere Perforierelemente verwendet werden. Im Falle eines Perforierelementes bildet dessen Perforierspiegel die Form des thermogeformten Artikels entlang dem Verlauf der mechanischen Schwächung nach. Im Falle mehrere Perforierelemente bildet jedes Perforierelement einen Abschnitt der Perforierung aus. Das Einbringen der Perforation geschieht durch einen Vorschub des Perforierelementes relativ zu dem im Werkzeug vorliegenden Material. Im Falle mehrerer Perforierelemente kann dieser Vorschub gleichzeitig oder zeitlich versetzt sowie aus einer Richtung oder aus mehreren Richtungen erfolgen.

Das Einbringen der Schwächung erfolgt während des Zeitraums, in dem sich das umzuformende Material in dem Thermoformwerkzeug befindet (Anspruch 1). Nach einer besonderen Ausführungsform der Erfindung wird die Schwächung vor der "eigentlichen Umformung" der Kunststofffolie ausgebildet. Dieses hat den Vorteil, dass ein Werkzeug mit einem vorgespannten Perforierelement verwendet werden kann, das bei einem Schließen des Thermoformwerkzeugs dem Oberwerkzeug oder dem Unterwerkzeug voreilt. Auf diese Weise ist keine separate Steuerung für das Perforierelement notwendig. Die Stärke der Prägung kann durch die Größe des Voreilens oder der Vorspannung des Perforierelementes sowie der Einwirkzeit bestimmt werden. Die Vorspannung des Perforierelementes kann mittels bekannter Systeme wie z. B. Federn, Elastomerelementen, Hydraulik oder Pneumatik erzielt werden. Des Weiteren kann eine separate Ansteuerung für ein Perforierelement vorgesehen sein. Die Ansteuerung kann mittels bekannter Verfahren pneumatisch, kurvengesteuert, hydraulisch oder motorisch ausgeführt werden. In jedem Fall ist es auch möglich, die Perforierung nach der eigentlichen Formgebung des Kunststoffmaterials, aber immer noch in dem Thermoformwerkzeug durchzuführen.

Bei besonders schwierigen Geometrien des herzustellenden thermogeformten Artikels kann es sinnvoll sein, zunächst nur einen Teil der Schwächung und nachfolgend weitere Teilbereiche der Schwächung auszubilden. Beispielsweise kann ein erster Teil der Schwächung zunächst in einer ersten Ebene und weitere Teile der Schwächung nachfolgend in Ebenen ausgebildet werden, die zu der ersten Ebene schräg oder parallel ausgebildet sind. Auf diese Weise können sehr komplexe Geometrien thermogeformter Artikel erzeugt werden, die lediglich durch Vorgaben des Werkzeugbaus eingeschränkt werden.

Das Perforierelement wirkt bei dem erfindungsgemäßen Werkzeug mit einem Gegenlager zusammen. Dieses Gegenlager kann als Teil des Werkzeugoberbeziehungsweise -unterteils ausgebildet sein oder separat vorgesehen sein. Es ist auf die Geometrie des herzustellenden Artikels und des Perforierelementes abgestimmt. Bei komplexen Geometrien des Perforationselementes und des Gegenlagers kann es erforderlich sein, Abweichungen auf Grund von Fertigungsungenauigkeiten, thermischen, elastischen oder plastischen Dehnungen, Maschinenungenauigkeiten oder Werkstoffinhomogenitäten ausgleichen zu müssen. Nach einer weiteren Ausführungsform der Erfindung wird daher vorgeschlagen, dass das Perforierelement und/oder das Gegenlager eine Ausgleichsstruktur aufweist, die ausgleichende elastische Verformungen dieser Elemente zulässt. Die Ausgleichsstruktur kann beispielsweise durch Elastomerelemente, Federelemente sowie Auf-/Untermaß oder Schlitze senkrecht zur Ausgleichsrichtung realisiert sein. Sie können im Perforationselement, im Gegenlager oder in beiden vorgesehen sein.

Des Weiteren wird mit der Erfindung vorgeschlagen, dass das Werkzeug Strukturen zur Aufnahme des durch die Perforation oder Prägung verdrängten Materials aufweist, so dass das durch die Perforation oder Prägung verdrängte Material während und nach dem Perforationsvorgang in diese Strukturen fließt. In besonders vorteilhafter Weise sind die Strukturen in Form von Vertiefungen wie Aufnahmenuten vorzugsweise beidseitig entlang der mechanischen Schwächung ausgebildet. Hierdurch kann das durch die Perforation verdrängte Materialvolumen entsprechend seines natürlichen Fließverhaltens in die beidseitigen Aufnahmestrukturen strömen und führt nicht zu verdickten Werkstoffbereichen seitlich neben der mechanischen Schwächung. Derartige verdickte Werkstoffbereiche könnten den nachfolgenden Thermoformvorgang nachteilig beeinflussen, da sie während des Thermoformvorgangs beseitigt werden müssten. Gelingt dieses nicht, ist die Qualität der hergestellten Artikel minderwertig, da der Niederhalter die Siegelfläche nicht vollflächig ausbilden kann. Darüber hinaus käme es zu einem Verkanten der Werkzeughälften, was eine dementsprechende Mehrbelastung sowohl des Werkzeugs als auch der gesamten Maschine zur Folge hätte. Während der Beseitigung der durch den Perforationsvorgang aufgeworfenen Werkstoffverdickung käme es zu einem erhöhten Werkzeugverschleiß, wodurch dessen Standzeiten in nachteiliger Weise verringert werden. Eine Folie könnte auf die unebene Fläche nur bedingt tauglich aufgesiegelt werden.

Nach einem weiteren Vorschlag sind im Falle mehrerer Perforier- oder Prägeelemente diese unabhängig voneinander positionierbar. Insbesondere ist eine Positionierbarkeit der Perforier- oder Prägeelemente in unterschiedlichen Raumrichtungen zueinander vorgesehen. Hierdurch wird die Möglichkeit geschaffen, beispielsweise in hinterschnittenen Bereichen mechanische Schwächungen anzubringen. Durch eine unabhängige Ansteuerbarkeit der Perforier- oder Prägeelemente kann das erfindungsgemäße Verfahren zur Erzeugung der unterschiedlichsten thermogeformten Artikel verwendet werden.

Die mechanische Schwächung kann mittels Scherschnitt (Durchfallschnitt) oder Stumpfschnitt (Messerschnitt) in den Artikel eingebracht werden. Durch die Verwendung eines Scherschnittes ist as möglich insbesondere Randbereiche des Artikels mit einem Einschnitt zu versehen, der ein manuelles Trennen der Funktionsbereiche des Artikels durch den Nutzer erleichtert.

Weitere Merkmale und Vorteile der Erfindung ergeben sich aus der nachfolgenden Beschreibung besonders bevorzugter Ausführungsformen anhand der Figuren. Dabei zeigt:
- Fig. 1:: eine geschnittene Darstellung eines Thermoformwerkzeugs mit integrierter Perforationsvorrichtung für ein Becherelement,
- Fig. 2:: eine Schnittdarstellung eines Thermoformwerkzeugs mit integrierter Perforationsvorrichtung für ein Deckelelement,
- Fig. 3:: eine Schnittdarstellung des Thermoformwerkzeugs der Fig. 2 entlang der Linie III/III,
- Fig. 4:: ein bei dem Thermoformwerkzeug der Figuren 2 und 3 verwendbares Perforierelement in einer schematischen Darstellung und in einer Vergrößerung ,
- Fig. 5:: ein Gegenlager für das Perforierelement gemäß Fig. 4 in einer schematischen Darstellung sowie Variationen,
- Fig. 6:: verschiedene Ausführungsformen eines Perforierelementes,
- Fig. 7:: das Perforierelement und dessen Gegenlager aus dem Werkzeug der Fign. 1 und 8 in einer vergrößerten Ansicht,
- Fig. 8:: eine Schnittdarstellung des Thermoformwerkzeugs der Fig. 1,
- Fig. 9:: eine schematische, perspektivische Ansicht eines mit dem Werkzeug der Fign. 2 und 3 hergestellten Deckelelements und
- Fig. 10:: eine schematische, perspektivische Ansicht eines mit dem Werkzeug der Fign. 1 und 8 hergestellten Becherelements.

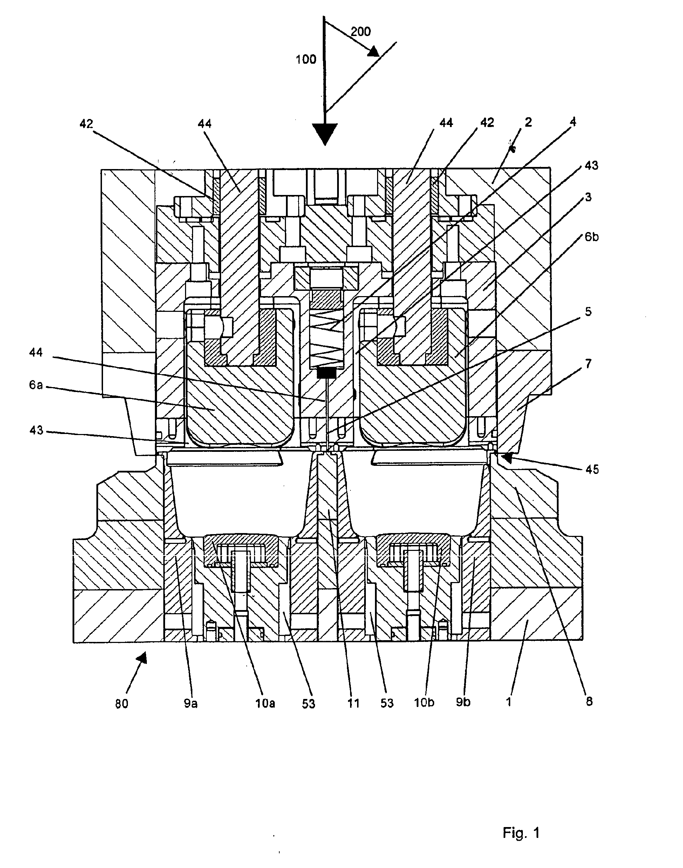

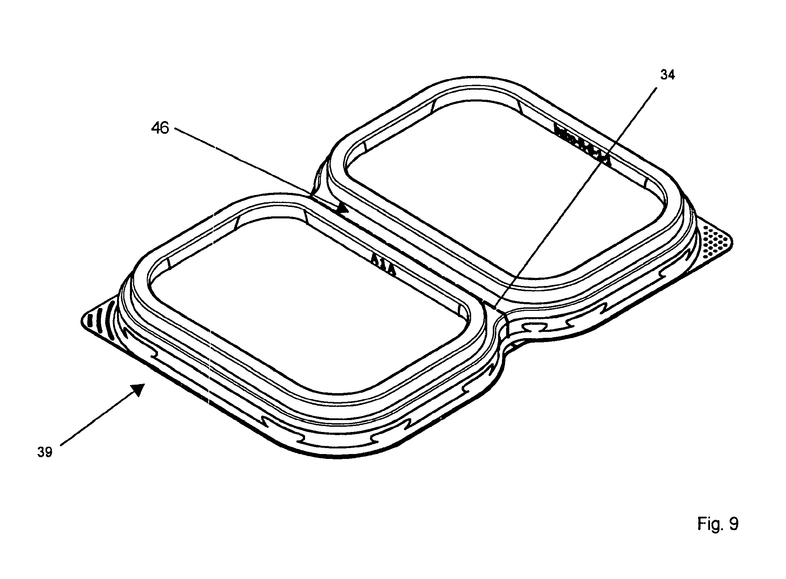

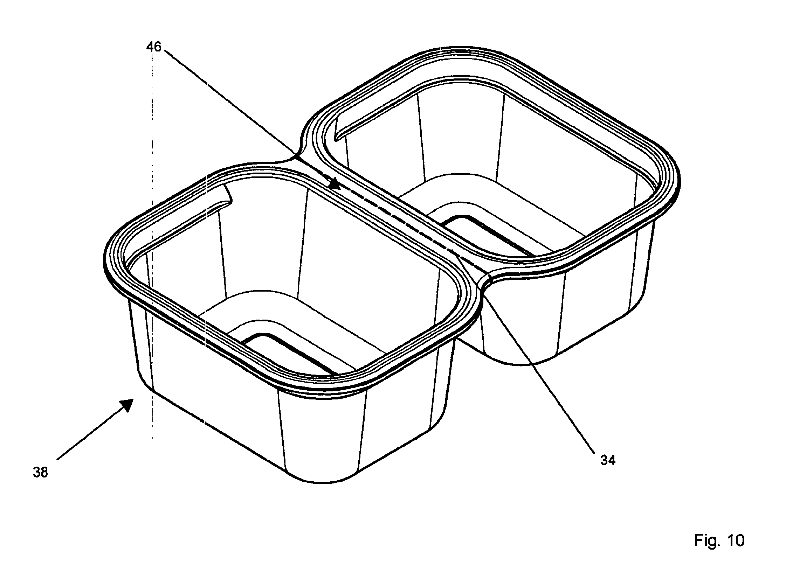

In den Figuren 1, 2, 3 und 8 sind zwei Ausführungsformen des erfindungsgemäßen Werkzeugs zur Herstellung thermogeformter Artikel beispielhaft dargestellt Mit diesen Werkzeugen können unter Nutzung des erfindungsgemäßen Verfahrens die in den Fign. 9 und 10 dargestellten Bestandteile - Becherelement 38 und Deckelelement 39 - einer Lebensmittelverpackung aus einer in das Werkzeug eingeführten Kunststofffolie hergestellt werden. Die dargestellten Werkzeuge weisen jeweils ein Unterwerkzeug mit einem Unterwerkzeugträger 1 und ein Oberwerkzeug mit einem Oberwerkzeugträger 2 auf.

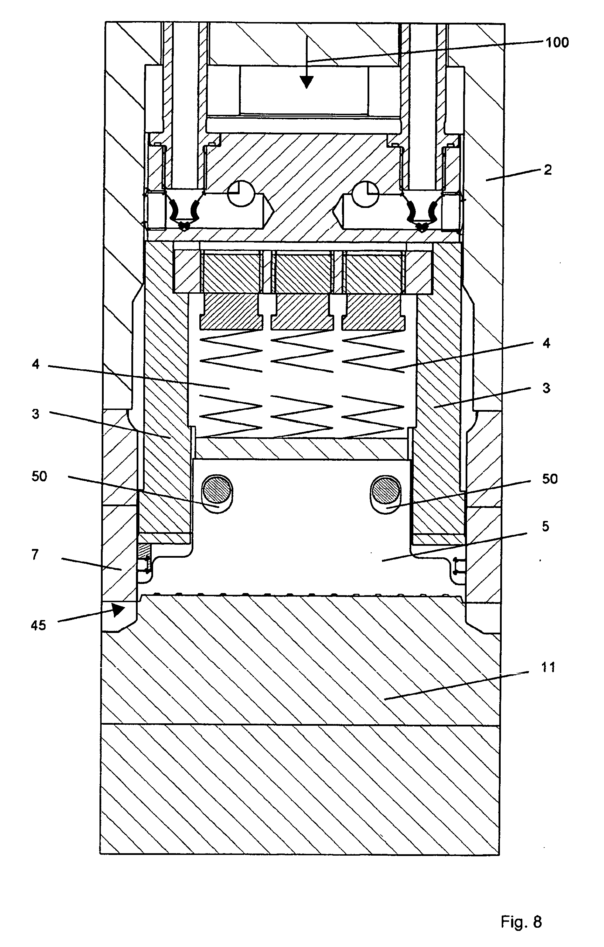

Das in den Fign. 1 und 8 dargestellte Thermoformwerkzeug zur Herstellung thermogeformter Becherelemente 38 weist einen im Oberwerkzeugträger 2 angeordneten Niederhalter 3 auf. Im Oberwerkzeugträger 2 und im Niederhalter 3 sind mittels Stösseln 41 a,b unter Zwischenlage entsprechender Linearführungen 42 zwei Vorstreckstempel 6 a,b geführt. Die Vorstreckstempel 6 a,b sind in entsprechend geformten Ausnehmungen 43 des Niederhalters 3 angeordnet.

In einer hier zentral angeordneten Ausnehmung 44 des Niederhalters 3 ist ein Perforierelement 5 in Richtung des Unterwerkzeugs linear verschiebbar angeordnet. Es ist in der Ausnehmung 44 mittels einer Feder 4 oder eines Federpaketes 4 gegenüber dem Niederhalter 3 vorgespannt.

Die Einheit aus Niederhalter 3, Vorstreckstempeln 6 a,b und Perforierelement 5 ist in Richtung des Unterwerkzeugs linear verschiebbar zum Oberwerkzeugträger 2 in diesem aufgenommen. An der zum Unterwerkzeug weisenden Seite des Oberwerkzeugträgers 2 ist eine Schnittplatte 7 mittels nicht dargestellten Befestigungsmitteln angeordnet. Sie wirkt mit einem am Unterwerkzeugträger 1 angeordneten Schnittstempel 8 zusammen und dient dazu, den Außenrand des mittels dem dargestellten Werkzeug hergestellten Becherelements 38 aus der Kunststofffolie auszustanzen.

In zwei in dem Schnittstempel 8 des Unterwerkzeugs vorgesehenen Ausnehmungen sind Formhülsen 9 a,b angeordnet. In dem dem Perforierelement 5 gegenüberliegenden Bereich zwischen den Formhülsen 9 a,b und dem Schnittstempel 8 ist ein Gegenlager 11 angeordnet, das mit dem Perforierelement 5 in einer später beschriebenen Weise zusammenwirkt. Die Formhülsen 9 a,b weisen jeweils eine Ausnehmung 53 auf, in der ein Auswerfer 10 a,b angeordnet ist, der gleichzeitig den Formboden ausbildet. Die Auswerfer 10 a,b sind gegenüber den Formhülsen 9 a,b, dem Schnittstempel 8 und dem Unterwerkzeugträger 1 in Richtung des Oberwerkzeugs linear verschiebbar.

Die aus Teilen der Innenkontur der Formhülse 9 a,b und der in Richtung des Oberwerkzeugs weisenden Fläche des Auswerfers 10 a,b gebildete Struktur bildet eine Form aus, entsprechend der die Außenseite des herzustellenden Becherelements konturiert wird.

Im Folgenden wird der Betrieb des in der Figur 1 dargestellten Thermoformwerkzeugs erläutert:

Zu Beginn des Arbeitszyklusses sind Unterwerkzeug und Oberwerkzeug geöffnet. Das Material für die herzustellenden Becher wird als Kunststofffolie in den zwischen Unterwerkzeug und Oberwerkzeug ausgebildeten Spalt 45 eingeführt, wobei das Werkzeug gegenüber der dargestellten Stellung weiter geöffnet ist. Das Material wurde bereits in einer dem Thermoformwerkzeug vorgeschalteten Heizstation auf eine geeignete Bearbeitungstemperatur erhitzt. Nach erfolgter Positionierung des Materials fährt das Oberwerkzeug in Richtung des Unterwerkzeugs vor. Der Vorschub des gesamten Oberwerkzeugs stoppt, es folgt ein alleiniger weiterer Vorschub von Niederhalter 3, Vorstreckstempel 6 a,b und Perforierelement 5. Auf Grund der mittels des Federpaketes 4 erzielten Vorspannung eilt das Perforierelement 5 dabei dem Niederhalter 3 und der Schnittplatte 7 vor. Das Perforierelement 5 kontaktiert die in dem Spalt 45 vorliegende Kunststofffolie zuerst. Es bringt entsprechend seiner Struktur und seiner Federvorspannung eine Perforation und/oder Prägung in die Kunststofffolie ein.

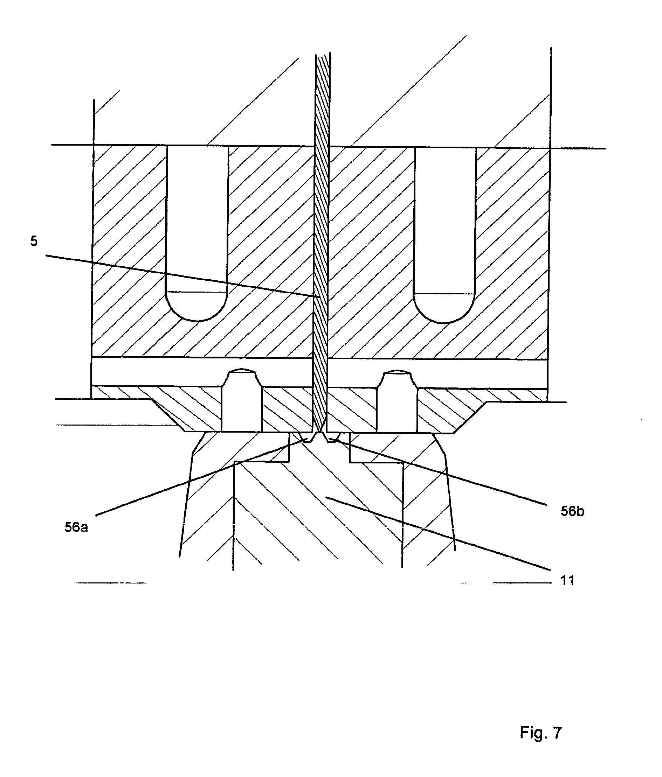

Kurz nach dem Aufsetzen und wenigstens teilweisen Eindringen in die Kunststofffolie des Perforierelementes 5 setzt der Niederhalter 3 auf die in dem Spalt 45 vorliegende Folie auf und fixiert diese relativ zum Thermoformwerkzeug. Die in Richtung des Unterwerkzeugs weisenden Flächen des Niederhalters 3 formen dabei die die spätere Oberseite des Becherrandes ausbildende Struktur aus. Der durch das Perforierelement 5 verdrängte Werkstoff fließt in in der Fig. 1 nur angedeutete und in der Fig. 7 in Vergrößerung deutlich erkennbare, seitlich des Perforierelementes 5 in dem Gegenlager 11 ausgebildete Nuten 56 ein. Dadurch wird die Werkstoffdicke der Kunststofffolie zwischen Niederhalter 3 und Gegenlager 11 in dem späteren Verbindungsstegbereich 46 des herzustellenden Becherelements 38 nicht derart verändert, dass es zu einem vorzeitigen Aufsetzen des Niederhalters 3 mit daraus resultierender erhöhter Flächenpressung kommt.

Nach dem Aufsetzen des Niederhalters 3 folgt ein Vorschub der Vorstreckstempel 6 a,b in Richtung des Unterwerkzeugs. Die Vorstreckstempel 6 a.b ziehen dabei das in dem Spalt 45 vorliegende Material der Folie in den aus Formhülse 9 a,b und Auswerfer 10 a,b gebildeten Hohlraum hinein. Durch Erzeugung eines Formdrucks in dem Bereich zwischen dem Material und dem Innenraum 43 zwischen dem Niederhalter 3 und den Vorstreckstempeln 6 a,b erfolgt eine Anlage des Kunststoffmaterials an die formgebende Kontur. Durch einen weiteren Vorschub des Oberwerkzeugträgers 2 in Richtung des Unterwerkzeugs kommt es zu einer Interaktion zwischen der Schnittplatte 7 und dem Niederhalter 3. Die Innenkontur der Schnittplatte 7 entspricht der Außenkontur des Schnittstempels 8. Auf Grund des Vorschubs schiebt sich die Schnittplatte 7 mit dieser Innenkontur über die Außenkontur des Schnittstempels 8, wodurch es zu einem Ausstanzen des das Becherelement 38 ausbildenden Materials kommt. Nach einer geeigneten Abkühlung - das Unterwerkzeug kann gekühlt ausgebildet sein - wird das gesamte Oberwerkzeug vom Unterwerkzeug abgehoben. Durch einen Vorschub der Auswerfer 10 a,b in Richtung des vollständig abgehobenen Oberwerkzeugs wird das nunmehr fertig geformte Becherelement 38 aus dem Unterwerkzeug ausgeworfen und aus dem Thermoformwerkzeug entfernt. Der gesamte zuvor beschriebene Zyklus wiederholt sich für die Herstellung eines weiteren Becherelements 38.

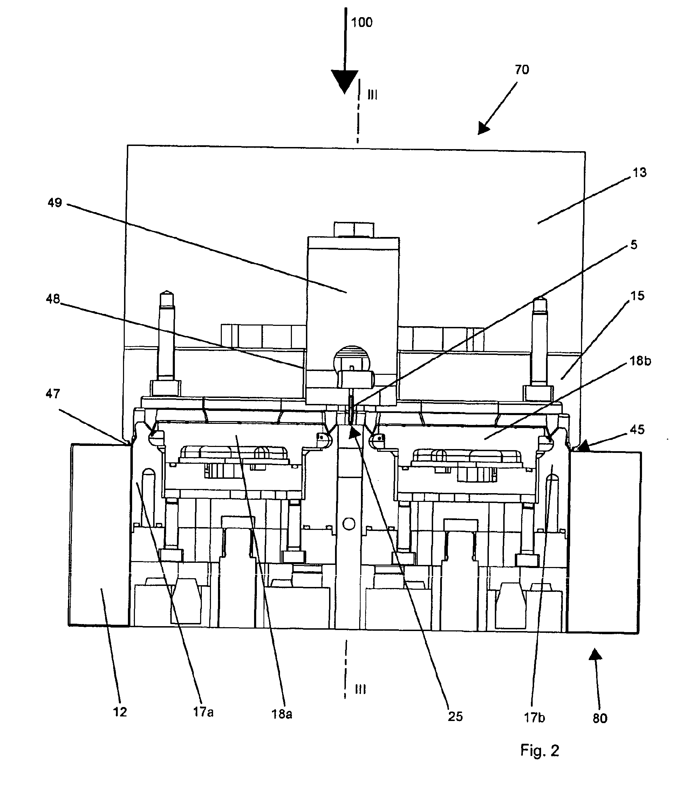

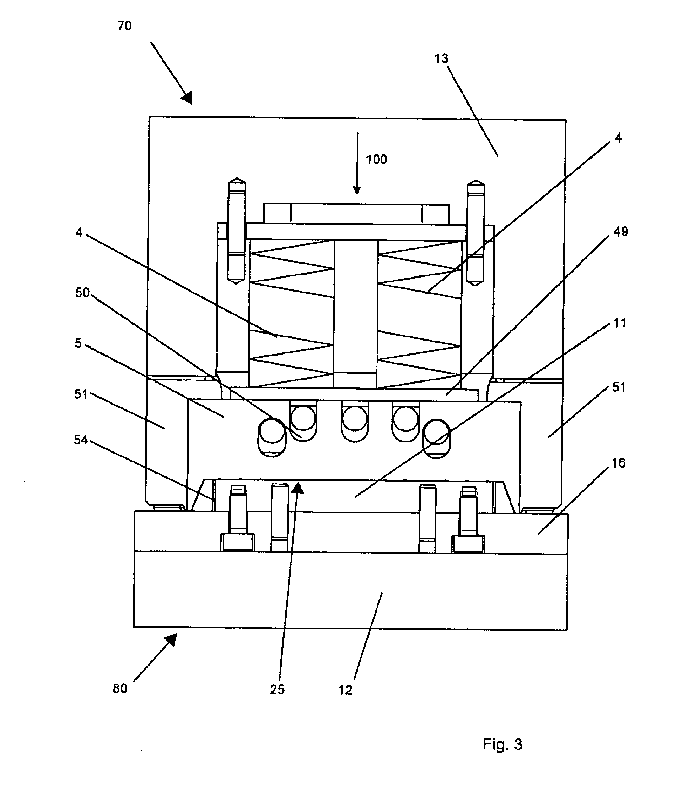

Das in den Figuren 2 und 3 dargestellte Thermoformwerkzeug zum Herstellen eines Deckelelementes 39 für das mittels der Vorrichtung gemäß den Fign. 1 und 8 hergestellte Becherelement 38 funktioniert in ähnlicher Weise. Das Oberwerkzeug weist einen oberen Werkzeugträger 13 auf. An diesem ist ein Schneidmesser 15 angeordnet. Das Schneidmesser 15 weist eine umlaufende Schnittkante 47 auf. Die in Richtung des Unterwerkzeugs weisende Seite des Schneidmessers 15 ist in dem innerhalb der umlaufenden Schnittkante 47 liegenden Bereich entsprechend der Oberseite des herzustellenden Deckelelements 39 konturiert ausgebildet.

Das Schneidmesser 15 weist eine Ausnehmung 48 auf, innerhalb der das Perforierelement 5 in einem Halter 49 angeordnet ist. Der Halter 49 und das Perforierelement 5 sind mittels zweier Federpakete 4 vorgespannt im oberen Werkzeugträger 13 derart angeordnet, dass eine relative Verschiebung in Längsrichtung der in der Fig. 3 erkennbaren Langlöcher 50 erfolgen kann. In der Fig: 3 seitlich des Perforierelementes 5 sind zwei Seitenperforierelemente 51 angeordnet. Diese sind relativ zum oberen Werkzeugträger 13 fixiert, so dass das Perforierelement 5 auch relativ zu den Seitenperforierelementen 51 in der zuvor beschriebenen Richtung verschiebbar ist.

In dem Bereich zwischen den beiden Formlingen 17 ist im Unterwerkzeug dem Perforierelement 5 gegenüberliegend ein Gegenlager 11 angeordnet. Dieses wirkt mit dem Perforierelement 5 sowie ggf. Seitenperforierelementen 51 beim Einbringen der mechanischen Schwächung in das Deckelelement 39 zusammen.

Gleichfalls am oberen Werkzeugträger 13 ist ein nicht dargestellter Klemmrahmen angeordnet, der mit Hilfe einer gleichfalls nicht dargestellten Gegenstanzplatte das folienförmige Ausgangsmaterial in dem Thermoformwerkzeug fixiert. Die Gegenstanzplatte besitzt neben dieser Funktion als Klemmwerkzeug die weitere Funktion, als Gegenelement zu der umlaufenden Schnittkante 47 des Schneidmessers 15 zu wirken, um ein Ausstanzen des zwischen Oberwerkzeug und Unterwerkzeug geformten Deckelelements 39 aus dem Folienbahnmaterial zu ermöglichen. Die Gegenstanzplatte ist am Unterwerkzeugträger 12 angeordnet. Gleichsam am Unterwerkzeugträger 1 angeordnet sind zwei Formringe 17, die Teile der späteren Innenkontur des herzustellenden Deckelelementes 39 ausbilden. Sie weisen jeweils eine Ausnehmung auf, innerhalb der ein Formboden 18 a,b angeordnet ist. Die Formböden 18 a,b besitzen die Funktion, Teile des inneren Bereichs des Deckelelementes 39 auszubilden und nach erfolgter Formgebung das hergestellte Deckelelement 39 aus dem Unterwerkzeug - ähnlich wie die Auswerfer 10 a,b bei dem zuvor im Zusammenhang mit der Fig. 1 erläuterten Thermoformwerkzeug - auszuwerfen.

Die Herstellung des Deckelelementes 39 erfolgt in ähnlicher Weise wie die des Becherelementes 38. Zunächst wird ein folienförmiges Ausgangsmaterial in einem dem Thermoformwerkzeug vorgeschalteten Heizbereich auf eine geeignete Verarbeitungstemperatur erhitzt und bei geöffnetem Thermoformwerkzeug in den zwischen Unterwerkzeug und Oberwerkzeug vorliegenden Spalt 45 eingezogen. Bei einer nachfolgenden Schließbewegung des Oberwerkzeugs in Richtung des Unterwerkzeugs setzt zunächst das dem Klemmrahmen und dem Schneidmesser 15 voreilende Perforierelement 5 auf dem Folienmaterial auf. Es wird die mechanische Schwächung in das Material eingebracht. Nachfolgend setzt der dem Schneidmesser 15 leicht voreilende Klemmrahmen auf und fixiert das Folienmaterial zusammen mit der Gegenstanzplatte. Durch einen weiteren Vorschub gelangt das Schneidmesser 15 in seine gewünschte Endlage relativ zum Unterwerkzeug. Die weitere Formgebung des Kunststoffmaterials erfolgt durch Erzeugen eines Formdrucks im Bereich zwischen Oberwerkzeug und dem Folienmaterial und/oder durch Erzeugen eines Unterdrucks in dem Bereich zwischen dem Unterwerkzeug und dem Folienmaterial. Das Deckelelement 39 wird mit Hilfe der umlaufenden Schnittkante 47 an der Gegenstandsplatte ausgestanzt. Nach einer geeigneten Abkühlzeit - das Thermoformwerkzeug kann gleichfalls gekühlt ausgebildet sein - erfolgt ein Öffnen von Unterwerkzeug und Oberwerkzeug, woraufhin das hergestellte Deckelelement 39 durch einen Vorschub der Formböden 18 aus dem Unterwerkzeug entformt und aus dem Thermoformwerkzeug entfernt wird. Der zuvor beschriebene Vorgang wird zur Herstellung weiterer Deckelelemente 39 wiederholt.

Wie der Fig. 3 zu entnehmen ist, sind in das Gegenlager 11 Elastomerelemente 54 eingebracht. Die Elastomerelemente 54 dienen dazu, z.B.Fluchtungsfehler, Maßabweichungen oder thermisch-oder belastungsbedingte Verformungen zwischen dem Gegenlager 11 und dem Perforierelement 5 sowie ggf. vorhandenen Seitenperforierelementen 51 sowie deren Abnutzungen durch eine elastische Verformung auszugleichen.

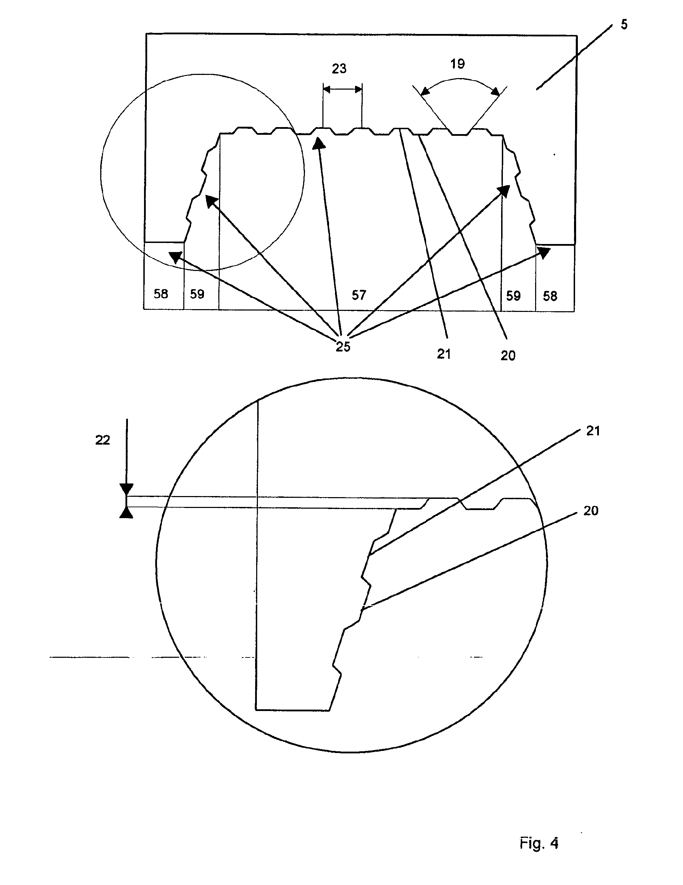

Während in der Fig. 3 die mechanische Schwächung in dem Deckelelement 39 mittels dem Perforierelement 5 sowie den Seitenperforierelementen 51 eingebracht wird, kann dieses auch ausschließlich mit dem in der Fig. 4 schematisch dargestellten einteiligen Perforierelement 5 geschehen. Dieses weist eine "gezahnt" ausgebildete Schnittkante, die auch als Perforier- oder Prägespiegel bezeichnet wird, auf. Diese Schnittkante besteht aus Zähnen 20, die die Perforierbreite bestimmen, zwischen den Zähnen 20 vorliegende Vertiefungen 21, die die Stegbreite der Perforation bestimmen, wobei die Einbuchtungen 21 gegenüber den Zähnen 20 um die Prägetiefe 22 zurückspringen. Weitere Parameter, die die zu erzeugende Perforation bestimmen, sind die Teilung 23, die Breite des Perforier- oder Prägespiegels 25 sowie der Schneidenwinkel 26. Das in der Fig. 4 dargestellte Element besitzt eine insgesamt im Wesentlichen brückenförmig ausgebildete Schnittkante mit zwei seitlich des mittleren Schnittkantenabschnitts 57 angeordneten Segmenten 59 sowie daran anschließende Abschnitte 58 zum Ausbilden von Perforationsbereichen außerhalb der Ebene des Deckelspiegels bzw. des Abschnitts 57.

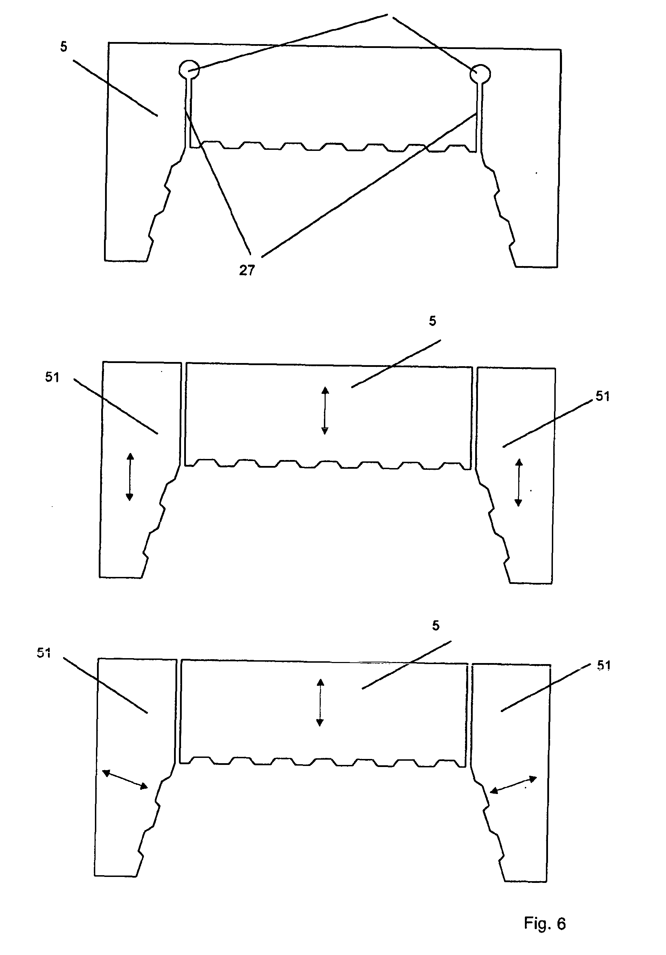

Die Fig. 6 zeigt zwei abgewandelte Ausführungsformen des in der Fig. 4 dargestellten Perforierelementes 5. Bei diesen Abwandlungen sind in das Perforierelement 5 ähnlich wie bei dem zuvor beschriebenen Gegenlager 11 Federschlitze 27 eingebracht, die dazu dienen, Fluchtungsfehler, Abweichungen etc. zwischen dem Gegenlager 11 und dem Perforierelement 5 auszugleichen. Die Federschlitze 27 weisen in ihrem Endbereich eine Entlastungsrundung 28 auf, die im Wesentlichen kreissegmentförmig ausgebildet ist und dazu dient, die durch die Federschlitze 27 in das Gegenlager 11 eingebrachte Kerbwirkung zu minimieren. Gleichfalls sind in der Fig. 6 Mitte und unten die Zustellmöglichkeiten eines zu dem in den Figuren 2 und 3 dargestellten Perforierelement 5 ähnlichem Perforierelement verdeutlicht. In der oberen rechten Abbildung erfolgt die Zustellung des Perforierelementes 5 unabhängig von der Zustellung der Seitenperforierelemente 51, jedoch in beiden Fällen in Richtung des Unterwerkzeugs. In der rechten unteren Darstellung erfolgt die Zustellung von Perforierelement 5 und Seitenperforierelementen 51 sowohl zeitlich als auch richtungsunabhängig voneinander.

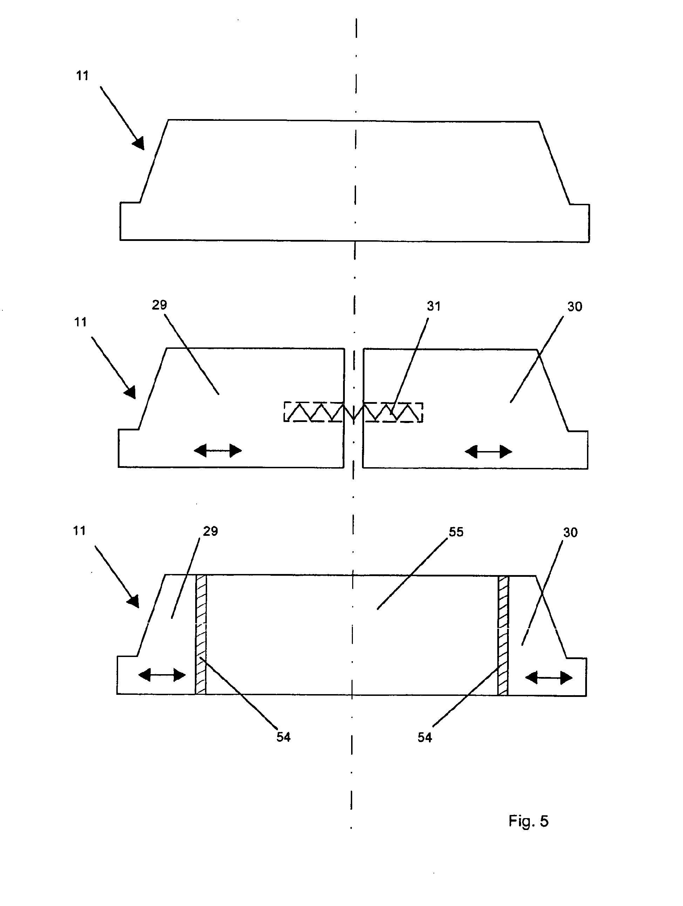

In der Fig. 5 sind einige Möglichkeiten dargestellt, wie das Gegenlager 11 entsprechend dem verwendeten Perforierelement für eine Verwendung in der vorliegenden Erfindung fest oder flexibel, das heißt mit entsprechenden Ausgleichselementen für Fluchtungsfehler, Abweichungen etc., ausgebildet werden kann:

In der ersten Alternative ist das Gegenlager 11 als massiver Block ausgebildet. Dieses Gegenlager 11 wird üblicherweise mit einem Perforierelement 5 gemäß der Fig. 6 verwendet. In einer anderen Form ist das Gegenlager zweiteilig ausgebildet, wobei die beiden Segmente 29,30 mittels einer Ausgleichsfeder 31 vorgespannt sind. Die beiden Elemente des Gegenlagers 11 sind verschiebbar im Unterwerkzeug aufgenommen, so dass sie auf Grund dieser verschiebbaren Aufnehmung und der Vorspannung mittels der Ausgleichsfeder 31 die in der Fig. 5 angedeutete Ausgleichsbewegung ausführen können. Ähnliche oder identische Ausgleichsbewegungen können durch die Verwendung eines Elastomerelementes 54 erzielt werden. In dem dargestellten Fall werden zwei Elastomerelemente 54 verwendet, die das Gegenlager 11 in einen Mittelteil 55 und zwei Außensegmenten 29,30 unterteilt. Eine weitere Möglichkeit ist die Einbringung von Federschlitzen, vorzugsweise mit Entlastungsrundungen 28.

Das erfindungsgemäße Verfahren sowie das erfindungsgemäße Werkzeug wurden vorstehend beispielhaft mit Bezug auf die Herstellung einer Lebensmittelverpackung mit einem Becherelement 38 sowie einem zu diesem passenden Deckelelement 39 beschrieben. Die in das Deckelelement 39 und das Becherelement 38 im Verbindungsstegbereich eingebrachte mechanische Schwächung in Form einer Prägung 33 oder einer Perforation 34 dient dazu, dass der Nutzer die einzelnen Teile der als Gebinde aus zwei oder mehreren Einheiten ausgebildeten Lebensmittelverpackung einzeln jeweils von dem Rest der Lebensmittelverpackung trennen und konsumieren kann (siehe Fign. 9 und 10). Es sind jedoch daneben weitere, nicht dargestellte Anwendungsmöglichkeiten für die vorliegend Erfindung gegeben. So ist es möglich, beispielsweise Deckelelemente herzustellen, bei denen ein Deckel eine aus einer Perforation und einer Prägung bestehenden mechanischen Schwächung aufweist, die in einem Eckbereich des Deckels angeordnet ist. Durch die in dem Deckel eingebrachte mechanische Schwächung ist es einem Nutzer möglich, diesen entlang der Perforation aufzureißen. Die aus Prägung und Perforation bestehende mechanische Schwächung unterteilt den Deckel in zwei Funktionsbereiche, nämlich einmal ein wieder verschließbares Deckelelement sowie den verbleibenden Rest des Deckels. Auf Grund der randseitigen Ausbildung des Deckels sowie der ggf. vorgesehenen Verwendung von Druckknöpfen ist das Deckelelement wieder verschließbar. Anwendungsfall für einen derartigen Deckel sind beispielsweise Verpackungen für Tiefkühlkräuter oder ähnliche Waren zum Ausbilden einer Schüttöffnung.

Bei einem anderen Deckel kann im Bereich des Deckelspiegels eine Trinkhalmöffnung ausgebildet sein. Diese wird durch eine mechanische Schwächung bestimmt, die gleichfalls aus einer Prägung und einer Perforation besteht und nutzerseitig geöffnet werden kann. Derartige Deckelelemente sind beispielsweise für Behälter für Heißgetränke oder Kaltgetränke im Fast Food-Bereich geeignet.

### Bezugszeichenliste

- 1: Unterwerkzeugträger
- 2: Oberwerkzeugträger
- 3: Niederhalter
- 4: Feder/Federpaket
- 5: Perforierelement
- 6a,b: Vorstreckstempel
- 7: Schnittplatte
- 8: Schnittstempel
- 9a,b: Formhülse
- 10a,b: Auswerfer
- 11: Gegenlager
- 12: Werkzeugträger unten
- 13: Werkzeugträger oben
- 15: Schneidmesser
- 17a,b: Formring
- 18a,b: Formboden
- 19: Perforierwinkel
- 20: Zahn
- 21: Vertiefung
- 22: Prägetiefe
- 23: Teilung
- 24: Segment für seitliche Perforation
- 25: Perforier- oder Prägespiegel
- 27: Federschlitz
- 28: Entlastungsrundung
- 29: Seg ment
- 30: Segment
- 31: Ausgleichsfeder
- 33: Prägung
- 34: Perforation
- 38: Becherelement
- 39: Deckelelement
- 41a,b: Stößel
- 42: Linearführung
- 43: Ausnehmung
- 44: Ausnehmung
- 45: Spalt
- 46: Verbindungsstegbereich
- 47: Umlaufende Schnittkante
- 48: Ausnehmung
- 49: Halter
- 50: Langlöcher
- 51: Seitenperforierelement
- 53: Ausnehmung
- 54: Elastomerelement
- 55: Mittelteil
- 56a,b: Entlastungsnut
- 57: Abschnitt
- 58: Abschnitt
- 59: Abschnitt
- 70: Oberwerkzeug
- 80: Unterwerkzeug
- 100: Werkzeugbewegungsrichtung

## Patentansprüche

1. Verfahren zur Herstellung thermogeformter Artikel, wie Lebensmittelverpackungen (40) oder Teile hiervon, mit einer mechanischen Schwächung (33,34) zwischen aneinander angrenzenden Funktionsbereichen, die im Rahmen einer nutzerseitigen Verwendung an der mechanischen Schwächung (33,34) voneinander wenigstens teilweise trennbar sind, in einem Thermoformwerkzeug mit einem Oberwerkzeug (70) und einem Unterwerkzeug (80), die gegeneinander bewegbar sind (Werkzeugbewegungsrichtung 100), aufweisend die Schritte:
Zuführen einer Kunststofffolie zwischen Oberwerkzeug (70) und Unterwerkzeug (80) und
Thermoformen der zugeführten Kunststofffolie durch Schließen von Oberwerkzeug (70) und Unterwerkzeug (80) in der
Werkzeugsbewegungsrichtung (100),
wobei die mechanische Schwächung (33,34) während des Zeitraums, in dem sich das zu formende Material in dem Thermoformwerkzeug befindet, eingebracht wird,
**dadurch gekennzeichnet, dass**
die mechanische Schwächung (33,34) in zueinander in der Werkzeugbewegungsrichtung (100) versetzten und sich senkrecht zu dieser erstreckenden Bereichen des Artikels ausgebildet wird und/oder die mechanische Schwächung (33,34) wenigstens teilweise in wenigstens einer sich in der Werkzeugbewegungsrichtung (100) erstreckenden Ebene in einem Winkel α (200) ungleich 90° zur Werkzeugbewegungsrichtung in dem thermogeformten Artikel verlaufend ausgebildet wird.

2. Verfahren nach Anspruch 1, **dadurch gekennzeichnet, dass** die Schwächung (33,34) eine Perforation (34) und/oder Prägung (33) ist.

3. Verfahren nach Anspruch 1 oder 2, **dadurch gekennzeichnet, dass** die mechanische Schwächung (33,34) linienförmig ausgebildet wird.

4. Verfahren nach einem der vorhergehenden Ansprüche, **dadurch gekennzeichnet, dass** wenigstens ein Teil der Schwächung (33,34) vor der Formgebung oder Umformung der Kunststofffolie ausgebildet wird.

5. Verfahren nach einem der vorhergehenden Ansprüche, **dadurch gekennzeichnet, dass** wenigstens ein Teil der Schwächung (33,34) zunächst in einem ersten Bereich des Artikels und nachfolgend in einem weiteren Bereich schräg oder parallel zu dem ersten Bereich ausgebildet wird.

6. Verfahren nach einem der vorhergehenden Ansprüche, **dadurch gekennzeichnet, dass** bei der Ausbildung der Schwächung (33,34) verdrängter Werkstoff der Kunststofffolie in im Oberwerkzeug (70) und/oder Unterwerkzeug (80) ausgebildete Vertiefungen (56), vorzugsweise Entlastungsnuten (56,56a,56b) fließt, wobei die Vertiefungen (56) vorzugsweise parallel und benachbart zu der mechanischen Schwächung (33,34) in den Werkstoff der Kunststofffolie eingebracht werden.

7. Verfahren nach einem der vorhergehenden Ansprüche, **dadurch gekennzeichnet, dass** die Kunststofffolie nach dem Zuführen und/oder nach dem Ausbilden der mechanischen Schwächung (33,34) mit einem Niederhalter (3) fixiert wird.

8. Verfahren nach einem der vorhergehenden Ansprüche, **dadurch gekennzeichnet, dass** die mechanische Schwächung (33,34) so ausgebildet wird, dass zwischen den Funktionsbereichen an wenigstens zwei in der Werkzeugbewegungsrichtung (100) versetzten Bereichen Werkstoffbrücken bestehen bleiben.

9. Werkzeug zur Herstellung thermogeformter Artikel, wie
Lebensmittelverpackungen (40) oder Teile hiervon, aufweisend:
ein Oberwerkzeug (70),
ein Unterwerkzeug (80) und
wenigstens ein im Oberwerkzeug (70) oder Unterwerkzeug (80) angeordnetes Perforier- oder Prägeelement (5) mit einem Perforier- oder Prägespiegel (25),
wobei das Oberwerkzeug und das Unterwerkzeug gegeneinander bewegbar sind (Werkzeugbewegungsrichtung 100),
**dadurch gekennzeichnet, dass**
- der Perforier- oder Prägespiegel (25) zumindest zwei erste Abschnitte (57,58) aufweist, die zueinander in der Werkzeugbewegungsrichtung (100) versetzt sind und sich senkrecht zu dieser erstrecken und jeder der zwei ersten Abschnitte (57,58) zur Ausbildung eines Abschnitts der mechanischen Schwächung (33,34) geeignet ist
und/oder
- der Perforier- oder Prägespiegel (25) wenigstens einen zweiten Abschnitt (59) aufweist, der zur Ausbildung eines Abschnitts der mechanischen Schwächung (33,34) geeignet ist und in einem Winkel α (200) ungleich 90° zur Werkzeugbewegungsrichtung ausgebildet ist.

10. Werkzeug nach Anspruch 9, **dadurch gekennzeichnet, dass** wenigstens ein Perforier- oder Prägeelement (5) gegenüber dem Oberwerkzeug (70) bzw. dem Unterwerkzeug (80) in der Werkzeugbewegungsrichtung (100) vorläuft.

11. Werkzeug nach Anspruch 9 oder 10, **dadurch gekennzeichnet, dass** wenigstens ein Perforier- oder Prägeelement (5) gegenüber dem Oberwerkzeug (70) bzw. dem Unterwerkzeug (80) vorgespannt ist.

12. Werkzeug nach einem der Ansprüche 9 bis 11, **dadurch gekennzeichnet, dass** es Vertiefungen auf der zur Kunststofffolie weisenden Seite von Oberwerkzeug (70) und/oder Unterwerkzeug (80) vorzugsweise in Form von Entlastungsnuten (56) zur Aufnahme des durch die Perforation oder Prägung verdrängten Folienwerkstoffs aufweist.

13. Werkzeug nach einem der Ansprüche 9 bis 12, **dadurch gekennzeichnet, dass** es ein Gegenlager (11) für das Perforier- oder Prägeelement (5) aufweist, das vorzugsweise eine elastische Verformungen ermöglichende zweite Ausgleichsstruktur (31,54) aufweist.

14. Werkzeug nach einem der Ansprüche 9 bis 13, **dadurch gekennzeichnet, dass** wenigstens ein Perforier- oder Prägeelement (5) eine seine elastische Verformung ermöglichende erste Ausgleichsstruktur (27) aufweist.

15. Werkzeug nach einem der Ansprüche 9 bis 14, **dadurch gekennzeichnet, dass** mehrere Perforier- oder Prägeelemente (5) vorgesehen sind und unabhängig voneinander positionierbar sind, wobei die Perforier- oder Prägeelemente (5) vorzugsweise in unterschiedlichen Raumrichtungen zueinander positionierbar sind.

## Claims

1. A method for producing thermoformed articles, such as food packagings (40) or parts thereof, with a mechanical weakening (33, 34) between adjoining functional areas, which are separable at least partly from each other at the mechanical weakening (33, 34) when utilized by a user, in a thermoforming die with an upper die (70) and a lower die (80) which are movable against each other (direction of movement (100) ofthe die), which method comprises the steps of:
feeding a plastic sheet between the upper die (70) and the lower die (80) and thermoforming the fed plastic sheet by closing the upper die (70) and the lower die (80) in the direction of movement (100) of the die,
the mechanical weakening (33, 34) being introduced during the period oftime during which the material to be formed is located in the thermoforming die,
**characterized in that**
the mechanical weakening (33, 34) is formed in areas of the article, which are mutually staggered in the direction of movement (100) of the die and extend vertically to it, and/or
the mechanical weakening (33, 34) is formed at least partly in at least one plane extending in the direction of movement (100) of the die at an angle α (200) other than 90° to the direction of movement of the die within the thermoformed article.

2. The method according to claim 1, **characterized in that** the weakening (33, 34) is a perforation (34) and/or stamping (33).

3. The method according to claim 1 or 2, **characterized in that** the mechanical weakening (33, 34) is formed in a line-shaped fashion.

4. The method according to any of the preceding claims, **characterized in that** at least one part ofthe weakening (33, 34) is formed prior to the shaping or reshaping of the plastic sheet.

5. The method according to any of the preceding claims, **characterized in that** at least one part of the weakening (33, 34) is first formed in a first area of the article and, subsequently, in a further area obliquely or in parallel to the first area.

6. The method according to any of the preceding claims, **characterized in that** material of the plastic sheet, which is displaced during the formation of the weakening (33, 34) flows into recesses (56) formed in the upper die (70) and/or lower die (80), which are preferably grooves (56, 56a, 56b), wherein the recesses (56) preferably are introduced into the material of the plastic sheet in parallel and adjacent to the mechanical weakening (33, 34).

7. A process according to any of the preceding claims, **characterized in that** the plastic sheet is fixed with a blank holder (3) after having been fed and/or after the formation of the mechanical weakening (33, 34).

8. The process according to any of the preceding claims, **characterized in that** the mechanical weakening (33, 34) is formed in such a way that bridges of material remain between the functional areas in at least two areas staggered in the direction of movement (100) of the die.

9. A die for producing thermoformed articles such as food packagings (40) or parts thereof, comprising:
an upper die (70),
a lower die (80) and
at least one perforating or stamping element (5) with a perforating or stamping cutting edge (25), which is disposed in the upper die (70) or the lower die (80),
the upper die and the lower die being movable against each other (direction of movement (100) of the die),
**characterized in that**
- the perforating or stamping cutting edge (25) comprises at least two first sections (57, 58) which are staggered relative to each other in the direction of movement (100) of the die and extend vertically to it and each of the two first sections (57, 58) is suitable for forming a section ofthe mechanical weakening (33, 34),
and/or
- the perforating or stamping cutting edge (25) comprises at least one second section (59) which is suitable for forming a section of the mechanical weakening (33, 34) and is formed at an angle α other than 90° to the direction of movement of the die, which is suitable for forming a section of the mechanical weakening (33, 34).

10. The die according to claim 9, **characterized in that** at least one perforating or stamping element (5) approaches the upper die (70) and/or the lower die (80) in the direction of movement (100) of the die.

11. The die according to claim 9 or 10, **characterized in that** at least one perforating or stamping element (5) is biased with respect to the upper die (70) and/or the lower die (80).

12. The die according to any of claims 9 to 11, **characterized in that** it has recesses on the side of the upper die (70) and/or the lower die (80) pointing towards the plastic sheet, preferably in the form of relief grooves (56), for receiving the sheet material displaced by the perforation or stamping.

13. The die according to any of claims 9 to 12, **characterized in that** it has a thrust bearing (11) for the perforating or stamping element (5), wherein the thrust bearing (11) preferably has a second compensating structure (31, 54) enabling an elastic deformation.

14. The die according to any of claims 9 to 13, **characterized in that** at least one perforating or stamping element (5) has a first compensating structure (27) enabling its elastic deformation.

15. The die according to any of claims 9 to 14, **characterized in that** several perforating or stamping elements (5) are provided and can be positioned independently of each other, wherein the perforating or stamping elements (5) preferably can be positioned in different space directions to each other.

## Revendications

1. Procédé de réalisation d'articles thermoformés, tels que des emballages alimentaires (40) ou des parties de ceux-ci, comprenant une zone de fragilisation mécanique (33, 34) entre des zones fonctionnelles adjacentes l'une à l'autre, qui peuvent être séparées au moins partiellement l'une de l'autre au niveau de la zone de fragilisation mécanique (33, 34) dans le cadre d'une utilisation par un utilisateur, dans un outil de thermoformage comprenant un outil supérieur (70) et un outil inférieur (80), qui sont mobiles l'un par rapport à l'autre (direction de déplacement de l'outil 100), comprenant les étapes suivantes:
- introduction d'une feuille de matière plastique entre l'outil supérieur (70) et l'outil inférieur (80) et
- thermoformage de la feuille de matière plastique introduite par fermeture de l'outil supérieur (70) et de l'outil inférieur (80) dans la direction de déplacement de l'outil (100),
dans lequel la zone de fragilisation mécanique (33, 34) est réalisée pendant le temps où la matière à former se trouve dans l'outil de thermoformage,
**caractérisé en ce que** l'on réalise la zone de fragilisation mécanique (33, 34) dans des zones de l'article décalées l'une par rapport à l'autre dans la direction de déplacement de l'outil (100) et s'étendant perpendiculairement à celle-ci et/ou on réalise la zone de fragilisation mécanique (33, 34) au moins partiellement dans au moins un plan s'étendant dans la direction de déplacement de l'outil (100) pour s'étendre dans l'article thermoformé sous un angle (200) différent de 90° par rapport à la direction de déplacement de l'outil.

2. Procédé selon la revendication 1, **caractérisé en ce que** la zone de fragilisation (33, 34) est une perforation (34) et/ou un gaufrage (33).

3. Procédé selon la revendication 1 ou 2, **caractérisé en ce que** la zone de fragilisation mécanique (33, 34) est réalisée sous la forme d'une ligne.

4. Procédé selon l'une quelconque des revendications précédentes, **caractérisé en ce qu'**au moins une partie de la zone de fragilisation (33, 34) est réalisée avant le formage ou la déformation de la feuille de matière plastique.

5. Procédé selon l'une quelconque des revendications précédentes, **caractérisé en ce qu'**au moins une partie de la zone de fragilisation (33, 34) est réalisée d'abord dans une première zone de l'article et ensuite dans une autre zone oblique ou parallèle à la première zone.

6. Procédé selon l'une quelconque des revendications précédentes, **caractérisé en ce que**, lors de la réalisation de la zone de fragilisation (33, 34), de la matière refoulée de la feuille de matière plastique s'écoule dans des cavités (56) formées dans l'outil supérieur (70) et/ou dans l'outil inférieur (80), de préférence des rainures de dégagement (56, 56a, 56b), dans lequel les cavités (56) sont pratiquées de préférence parallèlement à et à proximité de la zone de fragilisation mécanique (33, 34) dans la matière de la feuille de matière plastique.

7. Procédé selon l'une quelconque des revendications précédentes, **caractérisé en ce que** la feuille de matière plastique est fixée avec un serre-flan (3) après son introduction et/ou après la réalisation de la zone de fragilisation mécanique (33, 34).

8. Procédé selon l'une quelconque des revendications précédentes, **caractérisé en ce que** la zone de fragilisation mécanique (33, 34) est réalisée de telle manière qu'il subsiste des ponts de matière entre les zones fonctionnelles dans au moins deux zones décalées dans la direction de déplacement de l'outil (100).

9. Outil pour la réalisation d'articles thermoformés, tels que des emballages alimentaires (40) ou des parties de ceux-ci, comprenant:
- un outil supérieur (70),
- un outil inférieur (80), et
- au moins un élément de perforation ou de gaufrage (5) comportant une face de perforation ou de gaufrage (25), disposé dans l'outil supérieur (70) ou dans l'outil inférieur (80), dans lequel l'outil supérieur et l'outil inférieur sont mobiles l'un par rapport à l'autre (direction de déplacement de l'outil 100),
**caractérisé en ce que**
- la face de perforation ou de gaufrage (25) présente au moins deux premières parties (57, 58), qui sont décalées l'une par rapport à l'autre dans la direction de déplacement de l'outil (100) et s'étendent perpendiculairement à celle-ci et chacune des deux premières parties (57, 58) convient pour la formation d'une partie de la zone de fragilisation mécanique (33, 34), et/ou
- la face de perforation ou de gaufrage (25) présente au moins une deuxième partie (59), qui convient pour la formation d'une partie de la zone de fragilisation mécanique (33, 34) et qui est réalisée sous un angle (200) différent de 90° par rapport à la direction de déplacement de l'outil.

10. Outil selon la revendication 9, **caractérisé en ce qu'**au moins un élément de perforation ou de gaufrage (5) précède l'outil supérieur (70) ou l'outil inférieur (80) dans la direction de déplacement de l'outil (100).

11. Outil selon la revendication 9 ou 10, **caractérisé en ce qu'**au moins un élément de perforation ou de gaufrage (5) est précontraint par rapport à l'outil supérieur (70) ou à l'outil inférieur (80).

12. Outil selon l'une quelconque des revendications 9 à 11, **caractérisé en ce qu'**il présente des cavités sur le côté de l'outil supérieur (70) et/ou de l'outil inférieur (80) tourné vers la feuille de matière plastique, de préférence sous la forme de rainures de dégagement (56), destinées à recevoir la matière de la feuille refoulée par la perforation ou le gaufrage.

13. Outil selon l'une quelconque des revendications 9 à 12, **caractérisé en ce qu'**il présente une butée (11) pour l'élément de perforation ou de gaufrage (5), qui présente de préférence une deuxième structure d'équilibrage (31, 54) permettant des déformations élastiques.

14. Outil selon l'une quelconque des revendications 9 à 13, **caractérisé en ce qu'**au moins un élément de perforation ou de gaufrage (5) présente une première structure d'équilibrage (27) permettant sa déformation élastique.

15. Outil selon l'une quelconque des revendications 9 à 14, **caractérisé en ce qu'**il est prévu plusieurs éléments de perforation ou de gaufrage (5), qui peuvent être positionnés indépendamment les uns des autres, dans lequel les éléments de perforation ou de gaufrage (5) peuvent être positionnés les uns par rapport aux autres de préférence dans des directions spatiales différentes.
